# EUROPEAN PATENT SPECIFICATION

(11) **EP 1 798 438 B1**
(45) Date of publication and mention of the grant of the patent: **14.11.2012**
(21) Application number: 05257791.3
(22) Date of filing: 15.12.2005
(51) Int. Cl.: F16D 65/12

(54) **Brake disc mounting with tangential disc springs**
Bremsscheibenträger mit tangentialen Federn
Support de disque de frein avec ressorts tangentiels

(43) Date of publication of application: 20.06.2007
(73) Proprietor: BWI Company Limited S.A., 1628 Luxembourg (LU)
(72) Inventor: Challenor, Adam, Daventry NN1 5WN (GB); Kevin, Craik, Cheshire CW12 4WB (GB); Wiseman, Richard, Southam CV47 1GT (GB)
(74) Representative: Fox-Male, Nicholas Vincent Humbert

(56) References cited:
- WO-A-03/029684
- WO-A-2006/002932
- DE-C1- 10 025 102
- GB-A- 2 184 801
- US-A- 4 576 255
- US-A1- 2003 006 108

## Description

### Technical Field

The present invention relates to disc brakes and more specifically to a mounting arrangement for a brake disc in a disc brake. Moreover it relates to a disc brake including at least one axially slidable brake disc, and a mounting arrangement for such an axially slidable disc.

### Background of the Invention

A conventional disc brake comprises a single disc mounted upon a hub to rotate with the hub about a hub axis. Brake pads are mounted on opposite axial sides of the disc and are operable to frictionally engage either axial side of the disc to brake the rotation of the disc. The single disc is conventionally rigidly and axially fixed to the hub, with the pads floating and moving parallel to the axial direction.

In a modification, and different type of disc brake, the disc is axially slidably mounted to the hub such that while the disc is rotatably fixed to the hub to rotate therewith, the disc can in use slide axially along the hub. In particular two or more discs can be axially slidably mounted on the hub with brake pads arranged between the discs and at either axial end of the disc brake. The pads are arranged to press axially against the discs and slide the discs axially along the hub until each disc is frictionally engaged on both sides by the brake pads mounted between and at either axially end of the disc brake. Such arrangements, with axially slidably mounted discs, have a number of advantages, not least in enabling multiple discs to be mounted on the hub to increase the given braking surface area and efficiency of the disc brake.

In such disc brakes the axially slidable discs are keyed or splined onto the hub and are typically mounted to the hub by means of radially extending teeth or splines projecting from the disc which are slidingly engaged in cooperating axially extending hub slots. With such disc brakes it has been found that the mounting of the disc to the hub is especially important, yet particularly problematic and difficult, in order to achieve adequate and acceptable operation of the brake. In particular the mounting of the disc must adequately rotationally fix the disc to the hub and keep the disc in the correct operating position, perpendicular and centered coaxially with the hub axis, whilst at the same time allowing axial sliding of the brake disc. Any backlash or excessive clearances in the mounting while allowing easier axial sliding of the disc will adversely effect the positioning of the disc and so brake performance, as well as give rise to brake vibration, noise and wear of the mounting further increasing the clearances and backlash. Temperature differentials generated in use between the disc and hub can be severe and further exacerbate the problems of mounting the disc with the disc expanding more than the hub opening up clearances between the disc and hub. Indeed considerable work has been carried out to develop different arrangements for mounting of the brake discs in such disc brakes with axially slidable brake discs.

Various prior discs brake arrangements with axially sliding discs, and in particular focusing on mounting the discs to the hub to address the above concerns and problems are described, for example, in GB 2 184 801, WO 00/09911, WO 00/09904, WO 98/26192, WO 00/09903, WO 01/86167, EP 1211433, WO 02/48569, GB 2371841 amongst others.

In these arrangements resilient means, in the form of various spring configurations (both wire and leaf type), are provided between the disc and hub to provide a radial biasing force to center the discs and hold them in the correct attitude and position In particular the springs accommodate differential thermal expansion of the discs and hub whilst maintaining and holding the disc in the correct position both coaxial and centered on the hub, and also prevent titling of the discs. The springs also reduce and damp vibration between the disc and hub, and noise generated by the brake. The springs, in accordance with the teaching of these proposals provide a radially directed force. Circumferential location and engagement of the disc is provided by abutment of the disc teeth with the axially extending hub slots. However in order to allow axial sliding of the disc a clearance has to be provided between the disc teeth and hub slot. As a result there is a degree of circumferential play in the circumferential location of the disc which can move slightly in use giving rise to vibration, and noise. This also gives rise to fretting which increases the clearance further exacerbating the vibration, noise and wear. In addition when the brake is operated, and the disc restrained, the disc tooth has to first move within the slot to take up the clearance before it abuts against the hub slot to react the torque and brake the rotation of the hub. This slight backlash and play, in extreme cases, can be felt by the driver giving poor braking feel, as well as imposing undesirable impact stress on the hub and disc teeth.

In alternative prior proposals described in US 4,844,206, US 4,865,160, and EP 0,394,337 specially shaped liners are interposed between the hub slots and disc teeth. These liners have and arcuate resilient deformable wall to apply a circumferential/tangential force between disc slot and tooth which acts to cushion the rotor, and reduce rattle and vibration. In addition the tangential force centers the disc on the hub. The liner also, and primarily, reduces wear and protects the hub slot/disc tooth. This arrangement accordingly addresses some of the problems with the previous arrangements discussed above. However, it has been found that the liner undesirably increases the axial sliding friction on the disc restricting axial movement of the disc. In particular in use deformation of the liner creates ridges in the liner surface restricting axial sliding of the disc. Fretting and wear of the liner also generates ridges and roughens the liner surface restricting axial sliding of the disc over the liner surface. The interposition of the liner between the disc tooth and hub slot also, it has been found gives rise to increased friction as well as increased fretting and wear. To accommodate the liner the clearance between the tooth and slot also has to be undesirably increased. Furthermore it is difficult to generate a sufficient and suitable tangential resilient force by means of the arcuate resilient shaped liner wall within the small clearance between the tooth and hub slot. Additionally in use the arcuate wall of the liner is deformed and squashed between the tooth and hub slot under operational loads, the arcuate wall is flattened reducing the resilient force provided, and in extreme cases indenting the liner. Accordingly this arrangement is severely flawed from a practical perspective.

It is therefore desirable to provide an improved brake disc mounting arrangement which addresses the above problems and concerns and/or provides an improved disc brake arrangement which offers improvements generally.

### Summary of the Invention

According to the present invention there is provided a disc brake assembly as described in the accompanying claims.

In an aspect of an embodiment of the invention there is provided a disc brake comprising a hub mounted to rotate about a central axis, a disc axially slidably mounted on the hub to rotate in use with the hub and axially slide along the hub parallel to the axis, and a plurality of force applicators each comprising a leaf type spring and mounted between the hub and disc to apply in use a circumferentially-directed biasing force between the disc and hub. The disc is axially slidably mounted on the hub by a plurality of radially projecting teeth which are slidingly engaged in a corresponding plurality of axially extending slots, with the teeth and slots having respective circumferentially facing drive faces which abut in use against each other. The force applicators are arranged to act between the disc and hub at a location spaced from the line of action of the circumferential contact force between drive faces of the teeth and slots, to force the drive faces of the teeth into engagement with the drive faces of the slots.

Advantageously since the circumferentially directed biasing force act between the disc and hub away from the abutment of the drive faces force applicators do not impede abutment of the drive faces and so the force applicators are less affected (for example deforming, over stressing, or wearing) by the high circumferential loads generated, in use between the drive faces. As a result a more consistent biasing force is applied, the disc is more stablely and consistently located on the hub, and vibration and noise are reduced whilst allowing the disc to easily axially slide.

The force applicators may act between the disc and hub at a location which is either axially or radially, or both axially and radially spaced from the in use abutment of the drive faces of the teeth and slot.

Preferably the circumferentially-directed biasing force applied by the plurality of resilient force applicators biases the disc relative to the hub in a direction opposite to the predominant direction of rotation of the disc and hub. Preferably the circumferentially-directed biasing force applied by the plurality of resilient force applicators biases the drive faces on one side of the teeth against the corresponding drive faces of the slots.

The teeth preferably project radially inwardly from the disc, and the slots are formed in an outer circumference of the hub. The force applicators may then be located on the hub and act on the teeth. In particular the force applicators may be located in the slots. A portion of the force applicators may slidingly abut against the hub and may be arranged in use to circumferentially slide relative to hub and frictionally damp circumferential movement of a portion of the force applicators which acts on the disc tooth.

The force applicators may also act between the disc and hub, at a location spaced from the in use abutment of the drive faces of the teeth and slot, to also apply in use a radially-directed biasing force between the disc and hub. In particular the force applicators may act between the disc and hub, at a location spaced from the in use abutment of the drive faces of the teeth and slot, to apply in use an angled biasing force between the disc and hub having both a circumferentially-directed component and a radially directed component. Accordingly the force applicators may act between the disc and hub on an angled surface which is at an angle to both the circumferential and radial directions.

Preferably the force applicators have an aperture defined therein and the force applicators are fitted over the teeth with the teeth located within the aperture which has an axial width greater than an axial thickness of the disc so as to accommodate cyclical axial movement of the disc within the aperture during normal braking operation.

This arrangement and mounting of the force applicator over the teeth provides a convenient way of locating and mounting the force applicators which does not impeded the normal sliding operation of the brake, yet which moves the force applicator axially along the hub to ensure that it is in the correct positions as the pads and disc wear.

### Brief Description of the Drawings

The present invention will now be described; by way of example, with reference to the accompanying drawings, in which:-
Figure 1 is a perspective view of a disc brake assembly including twin axially slidable discs;
Figure 2 is an exploded perspective view of the disc brake shown in figure 1;
Figure 3 is a rear perspective view of a disc spring in accordance with a first embodiment of the present invention, and for use in the disc brake shown in figures 1 and 2;
Figure 4 is a front perspective view of a disc spring shown in figure 3;
Figure 5 is a schematic detailed axial cross sectional view of the disc spring shown in figures 3 and 4 installed in the disc brake of figure 1;
Figure 6 is perspective view of a disc spring that is not part of the present invention, and for use in the disc brake shown in figure 1;
Figure 7 is a perspective view of the disc spring shown in figure 6 installed in the disc brake of figure 1;
Figure 8 is perspective view of a disc spring that is not part of the present invention, and for use in the disc brake shown in figure 1;
Figure 9 is a perspective view of the disc spring shown in figure 8 installed in the disc brake of figure 1;
Figure 10 is a schematic detailed axial cross sectional view of the disc spring shown in figure 9 installed in the disc brake of figure 1;
Figure 11 is perspective view of a disc spring in accordance with a fourth embodiment of the present invention, and for use in the disc brake shown in figure 1;
Figure 12 is a perspective view of the disc spring shown in figure 11 installed in the disc brake of figure 1;
Figure 13 is perspective view of a disc spring in accordance with a fifth embodiment of the present invention installed in the disc brake of figure 1;
Figure 14 is perspective view of a disc spring in accordance with a sixth embodiment of the present invention installed in the disc brake of figure 1;
Figure 15 is perspective view of a disc spring in accordance with a seventh embodiment of the present invention and for use in the disc brake shown in figure 1;
Figure 16 is a perspective view of the disc spring shown in figure 15 installed in the disc brake of figure 1;
Figure 17 is a schematic detailed axial cross sectional view of the disc spring shown in figure 15 installed in the disc brake of figure 1;
Figure 18 is perspective view of a disc spring in accordance with an eighth embodiment of the present invention and for use in the disc brake shown in figure 1;
Figure 19 is a perspective view of the disc spring shown in figure 18 installed in the disc brake of figure 1;
Figure 20 is a schematic detailed axial cross sectional view of the disc spring shown in figure 18 installed in the disc brake of figure 1;
Figure 21 is perspective view of a disc spring in accordance with an ninth embodiment of the present invention and for use in the disc brake shown in figure 1;
Figure 22 is a schematic detailed axial view of the disc spring shown in figure 18 installed in the disc brake of figure 1;

### Description of the Preferred Embodiment

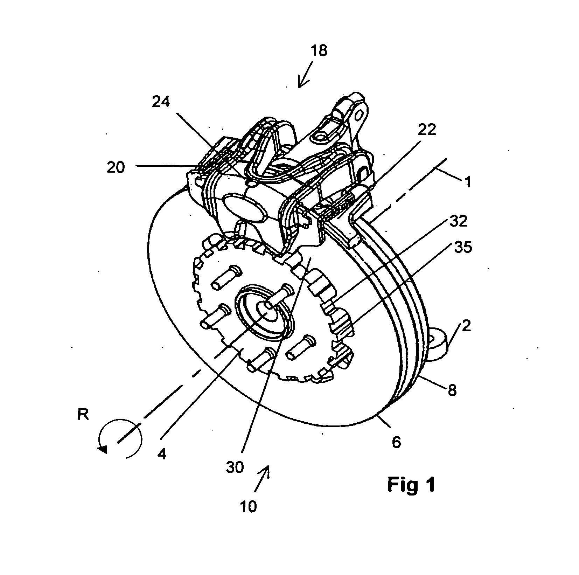

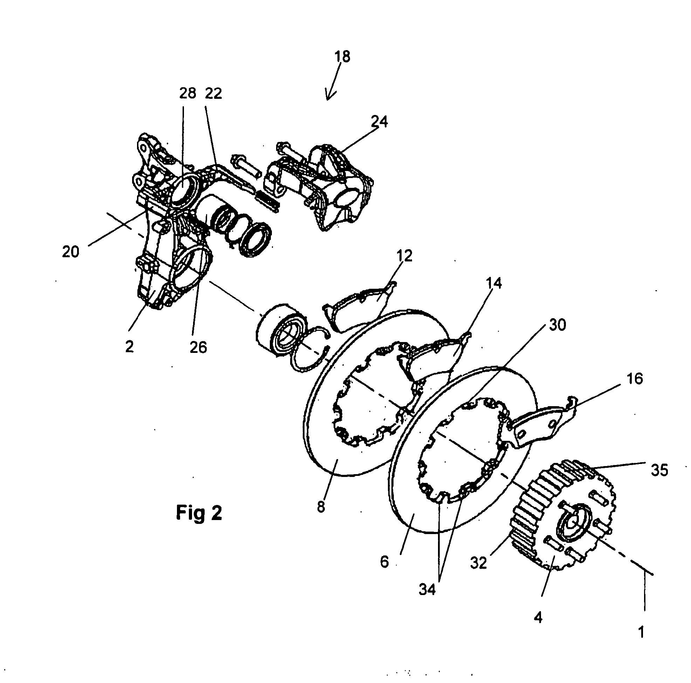

Referring to figures 1 and 2, a disc brake 10 is mounted upon a suspension link 2 of a vehicle. The suspension link 2 has a hub 4 mounted for rotation about a central axis 1 thereon. A wheel (not shown) is mounted on the hub 4 in the usual manner. The brake 10 comprises two discs 6,8 which are coaxially mounted on the hub 4 to rotate therewith about the common central axis 1. The discs 6,8 are axially spaced apart and are mounted on the hub 4 for axial sliding movement so that the discs 6,8 can slide axially on the hub 4, parallel to the axis 1 of rotation, but are rotationally secured to, and rotate with, the hub 4. In use the vehicle is generally driven in a forward direction and the wheel, and so discs 6,8 predominately rotate in a forward direction as indicated by arrow R.

Brake pads 12,16 comprising friction lining material mounted upon supporting backing plates, are arranged on opposite sides of the discs 6,8. A double sided centre brake pad 14 is located between the discs 6,8. The brake pads 12,14,16 are axially slidingly, but circumferentially fixedly, mounted to a caliper assembly 18 fixedly mounted to the suspension link 3, (and in this embodiment integral with the suspension link 3). Specifically, in this embodiment the pads 12,14,16 hang from a pair of parallel circumferentially spaced apart caliper bridge arms 20,22 (otherwise known as a torque carrier since they in use react and carry the braking torque) which are located radially outward of the discs 6,8 and bridge and extend parallel to the main axis 1 over the outer edges of the discs 6,8. The caliper assembly 18 further includes a C clamp element 24 (otherwise known as a caliper fist) which is similarly located radially outward of the discs 6,8 and bridges and extends parallel to the main axis 1 over the outer edges of the discs 6,8.

The caliper assembly 18 further comprises a brake actuator, typically as shown comprising a piston 26 mounted in a cylinder 28 defined in the caliper assembly 18. In use the brake actuator is operable to move and press the inner pad 12 in an axial direction into contact and against the first inner disc 8, causing the first inner disc 6 to slide axially along the hub 4 and into contact with the centre brake pad 14, which in turn slides axially into contact with the second outer disc 8 causing the second outer disc 6 to slide axially into contact with the outer brake pad 16. The outer brake pad 16 is restrained from axial movement by abutment against the C clamp 24, with the C clamp 24 being hooked over and behind (as compared to the operative axial direction) the caliper assembly 18. As a result the brake pads 12,14,16 are all pressed against and into frictional engagement with the discs 6,8. By virtue of the friction generated by the contact of the friction lining of the brake pads 12,14,16 with the disc surfaces, a braking force and circumferential braking torque on the discs 6,8 is generated which is reacted and resisted by the mounting of the brake pads 12,14,16 and fixed caliper assembly 18. The brake 10 and brake pads 12,14,16 thereby operate and apply a braking force and torque to the discs 6,8 generally at a single circumferential position around the discs 6,8, and as such the brake 10 is classified as a 'spot type' brake. Such spot type brakes, as are typical for motor vehicle use, can be contrasted with the very different full face annular disc brakes which comprise annular discs of friction lining material which contact the full annular face of the brake discs.

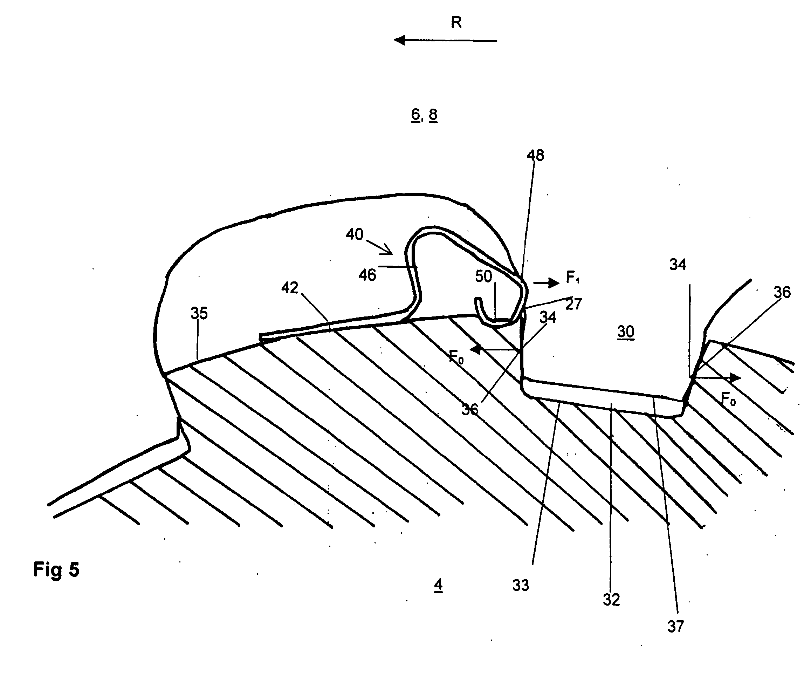

In order to prevent relative rotational movement between the hub 4 and the discs 6,8, but allow relative axial sliding movement parallel to the main axis 1, the hub 4 and discs 6,8 have corresponding intermeshing features, with the discs 6,8 being keyed and intermeshed onto the hub 4. Specifically, a plurality of axially extending slots 32 are defined in the outer cylindrical surface 35 of the hub 4. A plurality of projecting teeth 30 project radially inwardly from the annular discs 6,8. The teeth 30 have a width generally corresponding to the width of the slots 32, and have a pair of generally radially extending circumferentially oppositely facing drive faces 34 (see figure 5). The slots 32 are defined by a pair of generally radially extending circumferentially oppositely facing drive walls 36 (see figure 5) defining the width of the slot 32, and a bottom surface 33 generally parallel to the outer cylindrical surface 35 of the hub 4. The teeth 30 slidingly fit within the slots 32, with drive faces 34 of the teeth 30 abutting and engaged against the drive walls 36 of the slots 32 to react the torque between the disc 6,8 and hub 4 and thereby rotationally fix the disc 6,8 to the hub 4. Specifically the abutment and contact of the drive face 34 of the tooth 30 with the drive wall 36 of the slot 32 generates a generally circumferentially directed reaction force F0, centered on the centre of contact between the drive face 34 of the tooth 30 with the drive wall 36 of the slot 32.

While in the embodiments described and shown the teeth 30 project from the discs 6,8, it will be appreciated that in other embodiments the teeth may project from the hub and be engaged in cooperating slots in the disc. It will also be appreciated that the drive faces 34 and drive walls 36 of the teeth 30 and slots 32, whilst generally radially directed may not be strictly radial, and also may be tapered, curved or flat. Furthermore, as is known in the art, the drive faces 34 and drive walls 36 may not exactly correspond and abut over their entire contact surface but instead may contact only along a portion or line of contact.

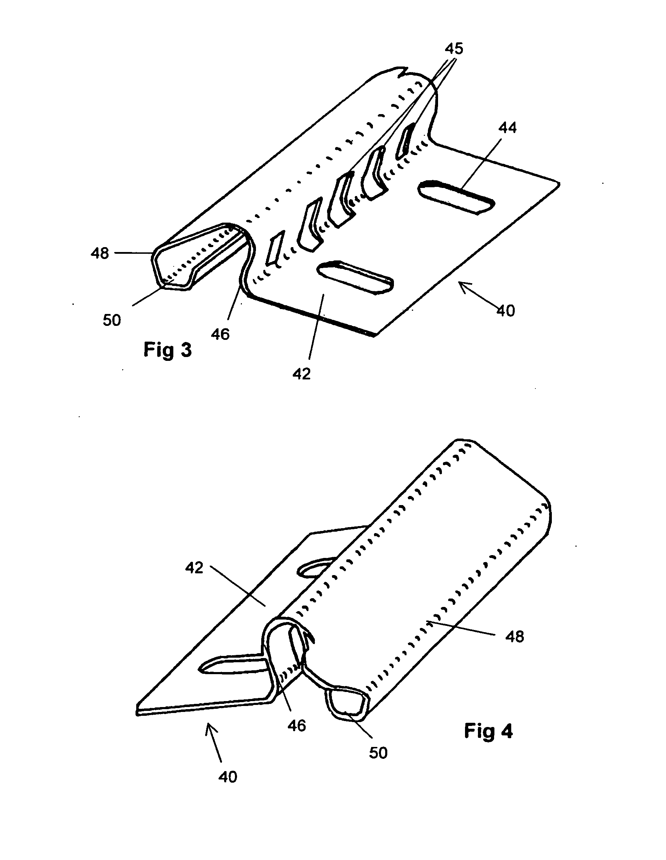

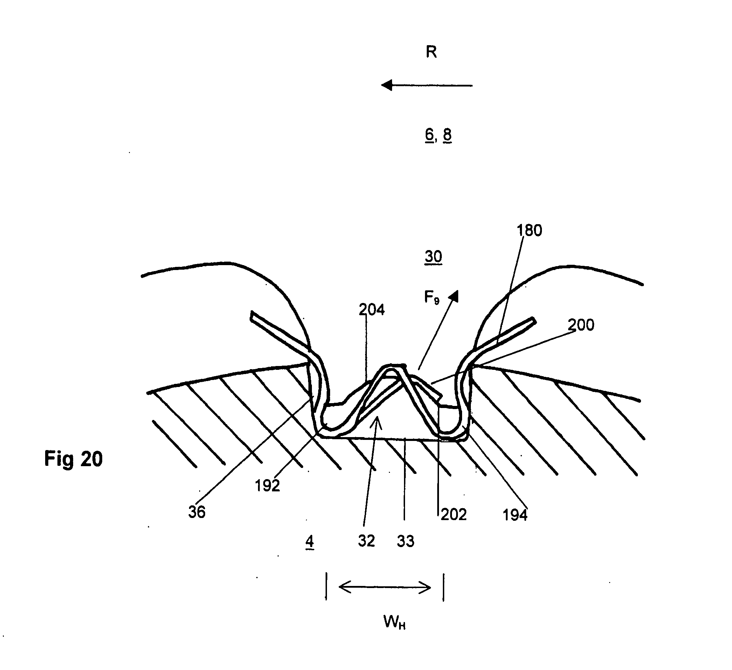

The disc brake 10, further comprises a plurality of resilient force applicators (not shown in figures 1 and 2) mounted between the hub 4 and discs 6,8, and acting in use to apply a circumferentially-directed biasing force between the discs 6,8 and hub 4. The resilient force applicators and the circumferentially (or tangentially) directed biasing force in use locates the disc teeth 30 within the slots 32. In addition, and since the teeth 30 and force applicators are circumferentially spaced around the hub 4 and disc, the resilient force applicators and the circumferentially directed biasing force also centers the disc coaxially on the hub 4, as well as generating reaction forces which hold the disc perpendicular to the hub axis 1 and restrict tilting of the disc 6,8 on the hub. The force applicators and circumferentially-directed biasing force also take up and accommodate any circumferential clearance between the disc teeth 30 and slot 32, and specifically between the drive faces 34 of the teeth and drive walls 36, thereby reducing circumferential play, so reducing noise, vibration, and wear, as well as improving operating feel of the brake 10. The resilience of the force applicators also acts to damp any circumferential movement of the disc 6,8 relative to the hub 4. Force applicators, for use and fitment to the disc brake 10 shown in figures 1 and 2, are shown in detail in various alternate embodiments in figures 3 to 21. Common features of these embodiments, in particular relating to the disc brake 10 and disc 6,8 and hub 4 are given common references throughout and are the same for each embodiments.

Referring to figures 3 to 5, in a first embodiment the force applicators comprise a plurality of leaf type springs 40 which are mounted circumferentially spaced around and on the outer cylindrical surface 35 of hub 4 adjacent to and acting on the disc teeth 32 of a disc brake 10 for example shown in figures 1 and 2 and described above.

The spring 40 is fabricated from sheet of spring steel suitably stamped and bent to the desired shape. The spring 40 comprises a base portion 42 which is adapted to be fitted onto and mount the spring 40 rigidly to the outer cylindrical surface 35 of the hub 4 with fasteners, such as screws or rivets (not shown), located in mounting apertures 44 in the base portion 42 attaching and securing the base portion 42 to the outer cylindrical surface 35 of the hub 4. Other suitable arrangements, for example adhesive, or other clip arrangements may however be used to secure and locate the base portion 42 and spring 40 on the outer cylindrical surface 35 of the hub 4.

A radially upstanding portion 46 of the spring 40 projects radially outwardly from the base portion 42 and curves round on itself, in a inverted U shape, to define a first circumferentially facing abutment portion 48 extending radially inwardly and spaced from the upstanding portion 46, and a second radially facing foot portion 50 toward the distal end of the spring 40. Air holes 45 may be cut in the spring 40 to allow a flow of air around and passed the spring when fitted to the disc brake 10 to aid in cooling of the brake 10. Such air holes 45 may also function, by removing material from the spring to adjust the resilience and so spring forces generated by the spring 40, allowing tuning of the spring and spring forces generated.

Figure 5 shows the spring 40 in its natural undeflected state superimposed in its mounting location on the hub 4. When the spring 40 is actually installed on the hub 4, the spring 40 is deflected by the contact and abutment of the foot portion 50 with the outer cylindrical surface 35 of the hub 4, and of the first abutment portion 48 with an upper edge portion 27 of the disc tooth 30. As a result, and due to the resilience of the spring 40 and its shape, when installed the spring 40 generates a circumferentially directed biasing force F1 between the disc 6,8 and hub 4 acting on the contact between the disc tooth 30 and first abutment portion 48 of the spring 40. This circumferentially directed biasing force F1 on the disc tooth 30 presses the drive face 34 of the disc tooth 30 on the opposite side of the tooth 30 to the spring 40 into engagement with the drive wall 36 of the slot 32, taking up any clearance between the drive face 34 and drive wall 36, and locating and positioning the tooth 32 within the slot 32 as well as centering the disc 6,8 on the hub 4.

Advantageously in this arrangement the circumferentially directed biasing force F1 acts on the disc tooth 30 at a location located away from the drive faces 34 and drive walls 36 of disc teeth 30 and slot 32 which in use abut against each other. In this case the circumferentially directed biasing force F1 and contact between the disc tooth 30 and first abutment portion 48 of the spring 40, whilst similarly acting on the edge 27 of the disc tooth 30 and in the same axial plane as the abutment between the drive face 34 and the drive wall 36, acts radially outwardly of the abutment between the drive faces 34 and drive walls 36 of the disc tooth 30 and hub slot 32. As a result the spring 40 does not impede abutment of the drive faces 34 of the teeth 30 with the drive walls of the hub slot 32, and so the spring is less affected (for example deforming, over stressing, or wearing) by the high circumferential loads generated, in use between the hub slots 32 and teeth 30. In particular the disc teeth 30 and drive faces 34 of the disc teeth 30are able to directly abut against the drive walls 36 of the hub slot and in the hub slot 32 to transmit the in use loads between the disc 6,8 and hub 4.

The foot portion 50 abuts and is in contact with the outer cylindrical surface 35, and the spring 40 presses against the outer cylindrical surface 35 of the hub 4. This generates friction and circumferential forces between the foot portion 50 and outer cylindrical surface 35 which frictionally locates the distal end of the spring 40 thereby supporting the first abutment portion 48. This further contributes to the circumferentially directed biasing force F 1 and frictionally damps movement of the distal end of the spring 40, and so of the first abutment portion 48 and in turn of the disc 6,8. This further reduces rattle and noise. The frictional contact between the foot portion 50 and hub 4 and this frictional damping advantageously does not however significantly increase friction between disc 6,8 and slot 32 which would undesirably restrict disc 6,8 axial sliding since it does not act directly on the disc 6,8.

Preferably, and as shown the springs 40 are located on a leading (with respect to the normal forward rotation R of the disc 6,8) side of the teeth 32 and the circumferentially directed biasing force F 1 is directed in the opposite direction to the normal direction of rotation R such that a trailing side and trailing drive face 34 of the tooth 32 is pressed against a trailing drive wall 36 of the slot 32. This has the further advantage of pre-loading the disc 6,8 in the braking direction, i.e. in the direction the disc 6,8 is loaded under braking, with it being appreciated that during braking of rotation of the disc 6,8 in the normal forward direction R the trailing side of the disc tooth 32 (right hand side in figure 5) abuts against he trailing side of the slot 32 to react the braking torque. By pre-loading the disc 6,8 in this way, and eliminating any clearance between the disc tooth and hub slot at this point, braking feel is improved and any impact loading with resultant stresses reduced.

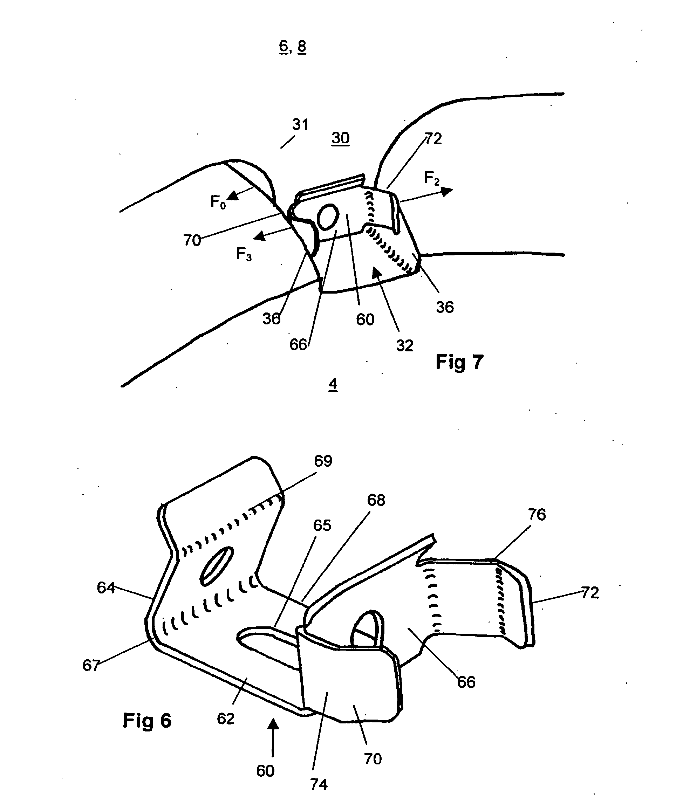

Figures 6 and 7 show an embodiment that is not part of the present invention. The embodiment includes a plurality of force applicators for a disc brake 10, as shown in figures 1 and 2, comprise a plurality of springs 60 which are arranged to clip and be mounted onto the disc teeth 30. Each spring 60 is fabricated from a sheet of spring steel, and has a generally U shape portion 62 comprising a base 61 from each end of which project respective upstanding arm portions 64,66. The U shaped portion 62 is arranged to clip onto the disc teeth 30 with the base portion 61 mounted against a bottom radially facing inner surface 37 of the tooth, and distal abutting portions 68,69 of the two arm portions 64,66 gripping and biased against to abut against axial facing surfaces 29,31 of the tooth 30 to thereby hold the spring 60 on the tooth 30. Fasteners (not shown), for example rivets or screws may be fitted though mounting apertures 65 in the base 61 of the spring 60 and are engaged in the bottom of the disc tooth 30 to secure the spring 60 to the disc tooth 30 and disc 6,8. Alternatively the fasteners may be located in arms 66,69 and in the axial faces 29,31 of the disc tooth 30, or the spring 60 may be secured in position on the tooth 30 by other means for example adhesive. Air holes 45 may be cut in the spring 40 to allow a flow of air around and passed the spring when fitted to the disc brake 10 to aid in cooling of the brake 10.

The spring 60 also includes a further pair of arms 70,72 which project from respective sides of one of the arm portions 66 of the U shape portion 62. Specifically these arms 70,72 are arranged, relative to the installed positions of the spring 60, to project from respective circumferential sides of the spring 60 in a generally axial direction axially away from the axial face of the disc tooth 31. The arms 70,72 have generally circumferentially facing abutment faces 74,76 towards their respective distal ends which are arranged to abut against the circumferential facing drive walls 36 of the slot 32. The arms 74,76 are biased outwardly away from each other by the resilience of the spring 60, and are deflected inwardly towards each other when installed in the slot 32. As a result, in this embodiment the spring 60, and specifically arm 70 applies a first circumferentially-directed biasing force F2 between the discs 6,8 and hub 4 in a first direction opposing the normal direction of rotation R, and arm 72 applies a second circumferentially-directed biasing force F3 between the discs 6,8 and hub 4 in the opposite direction. These circumferentially-directed biasing force F2, F3 between the discs 6,8 and hub 4 locate and centre the teeth 30 within the hub slot 32 thereby centering and positioning the disc 6,8. These forces F2,F3, and the resilience of the spring 60 also damp any movement between the disc teeth 30 and hub slot 32 thereby reducing vibration and rattle. The arms 70,72, and where they act between the disc 6,8 and hub 4 are, as in the previous embodiment, spaced from the from the abutment between the drive faces 34 and drive walls 36 disc teeth 30 and slot 32, and the resultant circumferentially directed biasing forces F2,F3 are spaced from the line of action of the circumferentially directed reaction force F0, centered on the centre of contact between the drive face 34 of the tooth 30 with the drive wall 36 of the slot 32. In this case the circumferentially directed biasing forces F2,F3 and contact and action of the spring 60 with the disc tooth 30, whilst generally at the same radial location, and against the drive wall 36 of the hub slot 32, is located axially away from of the circumferentially directed reaction force F0 and contact between the disc tooth 30 and hub slot 32. As a result the spring 60 does not impede abutment of the drive faces 34 of the teeth 30 with the drive walls of the hub slot 32, and so the spring 60 is less affected (for example deforming, over stressing, or wearing) by the high circumferential loads generated, in use between the hub slots 32 and teeth 30. In particular the disc teeth 30 and drive faces 34 of the disc teeth 30 are able to directly abut against the drive walls 36 of the hub slot and in the hub slot 32 to transmit the in use loads between the disc 6,8 and hub 4.

While this embodiment does not pre-load the disc 6,8 against the hub 4 ready to react the braking torque, as in the previous embodiment, in this embodiment by locating the spring 60 in the slot 32 the space required for the spring 60, and radial clearances between the disc 6,8 and hub 4 are minimized. In addition since the spring 60 abuts against the drive walls 36 of the hub slots 32, a separate further abutment surface is not needed, and the spring 60 assists in keeping the drive walls 36 clear of dirt which may become trapped between the disc tooth 30 and hub slot 32.

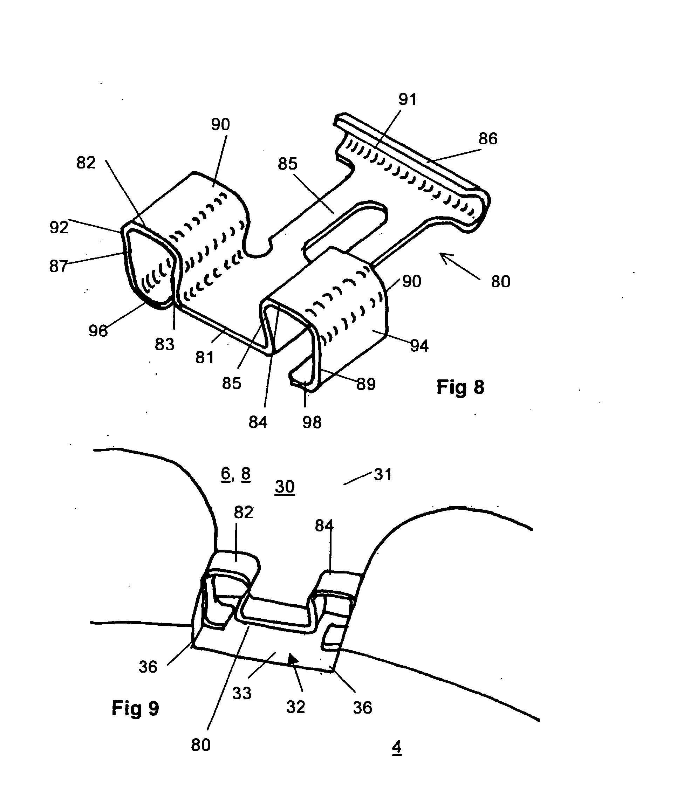

Figures 8 to 10, show a further embodiment which is not part of the present invention, in which the plurality of force applicators for a disc brake 10 as shown in figures 1 and 2, comprise a further alternative design of spring 80. Each of these springs 80, are similarly fabricated from sheet spring steel stamped and bent into the required shape. These springs 80 are to some degree similar to those shown in figures 6 and 7 and described above in that they clip onto and are secured to the disc teeth 30, abut against the drive walls 36 of the hub slot 32 and apply two circumferentially oppositely directed biasing forces F2,F3 which are axially spaced from the from of the circumferentially directed force F0 and contact between the drive faces 34 and drive walls 36 of the disc tooth 30 and hub slot 32.

As shown the spring 80 comprises a planar base portion 81 from the sides of one end of which project arm sections 82, 84. Each arm section 82,84 has a generally inverted U shape with one side 83,85 attaching to the base portion 81, and a free side 87,89 outward of the base portion 81 and spaced from the first side 83,85.The base portion 81 when the spring 80 is fitted to the tooth 30is arranged to extend underneath and mount against a bottom radially facing inner surface 37 of the tooth 30. The arm sections 82,84 are disposed and positioned against an axial face 31 of the tooth 32 axially forward and adjacent the disc 6,8 with a rear edge 90 of the arm sections 82, 84 abutting against the front axial face 31 of the disc tooth 30. A C shaped clip portion 86 projects upwardly, radially outwardly from a rear end of the base portion 81 opposite to the arms sections 82,84 and is arranged such that a distal edge 91 of the C shape clip 86 is biased and abuts against the other rear axial end face 29 of the disc tooth 30. The spring 80 is thereby clipped and located on the tooth 3 0 between the C shaped clip 86 and edges 90 of the arms sections 82,84. Fasteners (not shown), for example rivets or screws may be fitted though mounting apertures 85 in the base 81 of the spring 80 and are engaged in the bottom of the disc tooth 30 to further secure the spring 80 to the disc tooth 30 and disc 6,8. Alternatively the spring 80 may be secured in position on the tooth 30 by other means for example adhesive.

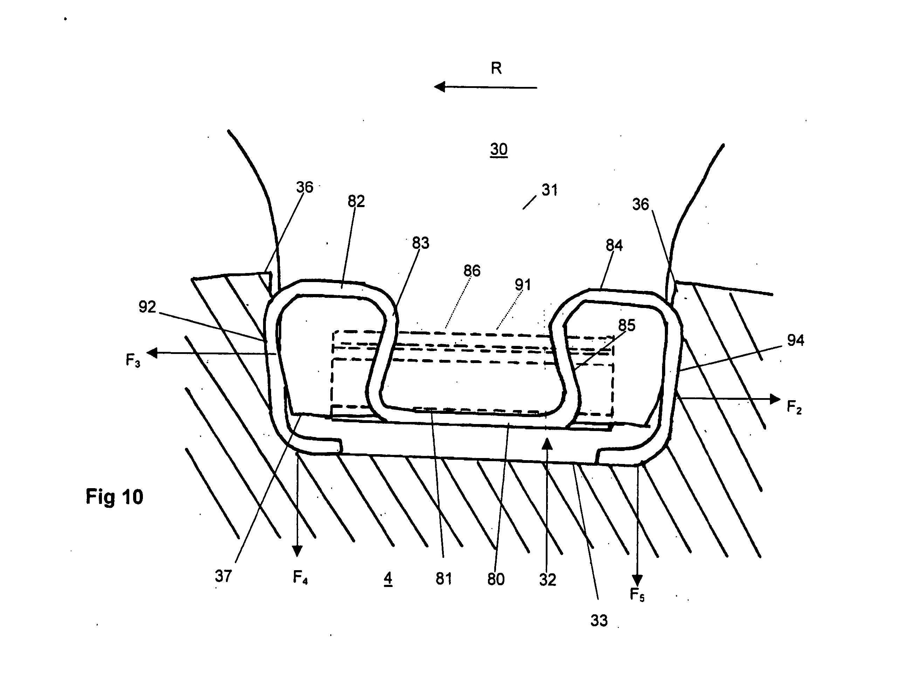

The outward free sides portions 87,89 of the arm sections 82,84, which extend generally radially, define abutment surfaces 92,94 which arranged in use to abut against the drive walls 3 6 of the hub slot 32 with the arm sections 82,84 and spring 80 fitting into the slot 32 between the drive walls 36, as shown in figure 9 and 10. Figure 10 shows the spring 80 in its natural undeflected state superimposed in its mounting location in the hub slot 32 and on the disc tooth 30. When the spring 80 is actually installed on the hub 4, the spring 80, and specifically arm sections 82,84 are deflected by the contact and abutment of the abutment surfaces 92,94 with the drive walls 36 of the hub slot 32. As a result, and due to the resilience of the spring 80 and the inverted U shape of the arm sections 82,84, when installed the spring 80 and arm sections 82,84 generate two circumferentially oppositely directed biasing forces F2,F3 acting between the drive walls 36 of the hub slot 32 and the abutment surfaces 92,94 and arm sections 82,84 of the spring 80, and thereby between the disc 6,8 and hub 4.

Each of the arms sections 82,84 also comprises a foot portion 96,98 at the distal end of the arms sections 82,84. The foot portions 96,98 are arranged to abut against the bottom surface 33 of the hub slot 32, and extend generally circumferentially. The spring 40, and arm sections 82,84 as well as the mounting of the spring 80 projecting from the bottom surface 37 of the disc tooth 30, biases the foot portions 96,98 against the bottom surface 33 of the slot 32. As a result the spring 80 also generates and applies radially directed biasing forces F4,F5 between the bottom surface 37 of the disc tooth 30 and bottom 33 of the hub slot 32, and so between the disc 6,8 and hub 4. These further radially directed biasing forces F4,F5, in addition to the circumferentially directed biasing forces F2,F3, further locate and stabilize the disc tooth 30 within the slot 32 and so disc 6,8 and on the hub 4.

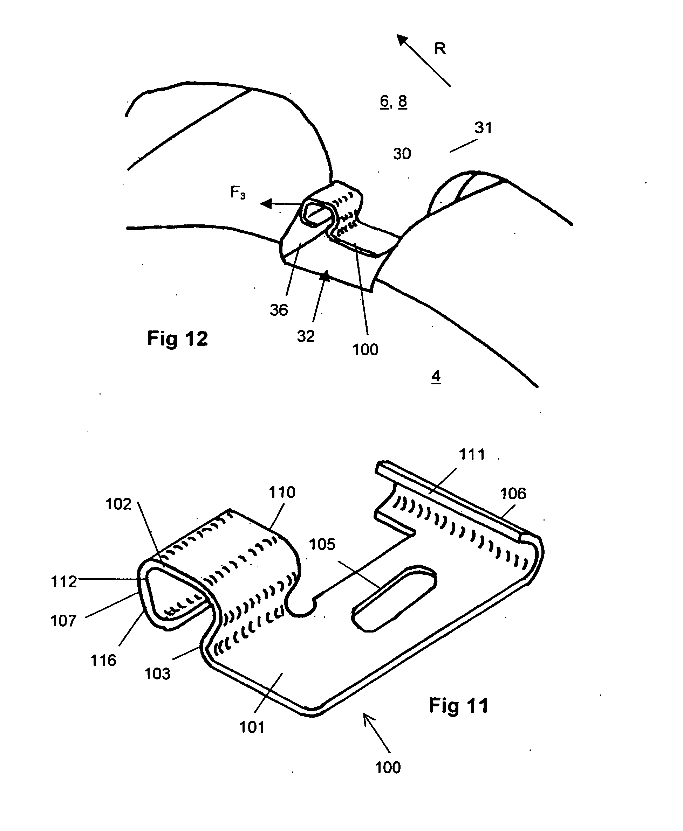

A further embodiment, and variation of the spring 80 shown in figures 8 to 10 is shown in figures 11 and 12. The spring 100 is clipped onto the tooth 30 with a base 101 against the bottom 37 of the tooth and a C clip section 106 with a distal edge portion 111 which abuts against the rear axial face 29 of the disc tooth 30. Fasteners (not shown), for example rivets or screws may be fitted though mounting apertures 105 in the base 101 of the spring 100 and are engaged in the bottom of the disc tooth 30 to further secure the spring 100 to the disc tooth 30 and disc 6,8. Alternatively the spring 80 may be secured in position on the tooth 30 by other means for example adhesive.

This spring 100 in this embodiment however only has a single inverted U shaped arm section 102 comprising side portion 103 connected to the base 101, and having a rear edge 110 which abuts against the front axial face 31 of the disc tooth 30. The single outward side portion 107 defines a single abutment surface 112 which when the spring 100 is installed in the hub slot 32 abuts against and is biased to act against the abutment wall 36 of the hub slot 32. As a result this spring 100 only generates a single circumferentially directed biasing force F3 between the disc tooth 30 and hub slot 32, and so between the disc 6,8 and hub 4.

The single arm section 102 is disposed towards the leading edge of the disc tooth 30, and abuts against a leading abutment wall of the hub slot 32 such that it urges and presses the opposite, trailing edge of the disc tooth 30 against the trailing abutment wall 36 of the hub slot 32. As a result the single circumferentially directed biasing force F3 centers and locates the disc tooth 30 within the slot 32 and against the trailing abutment wall 36 to both centre and locate the disc 6,8, and pre-load the disc 6,8 and disc tooth 30 in the braking direction (i.e. opposite direction to the normal rotation of the disc R) similar to the embodiment shown in figures 3 to 5. It will be appreciated that whilst the single circumferentially directed biasing force F3 generated in this embodiment by the spring 100 is directed in the opposite direction to the single circumferentially directed biasing force F1 generated in the embodiment shown in figures 3 to 5, the effect of these single circumferentially directed biasing forces F1, F3 is the same in that they both urge the disc 6,8 relative to the hub 4 in the opposite direction to that of the normal forward rotation R of the disc 6,8 in order to pre-load the disc teeth 30 against the correct abutment wall 36 of the hub slots 32.This different is due to the spring 100 being mounted on the disc 6,8, whilst the spring 40 is mounted on the hub 4.

As shown in figures 11 and 12 in this embodiment the distal end 116of the single outward side portion 107 of the arm section 102 does not project below the base 101 nor project beyond the bottom of the disc tooth 30, and so does not abut against the bottom of the hub slot 32. No additional radial biasing force is therefore generated. However in a further variation the distal end of the single outward side portion 107 of the arm section 102 could project below the base 101 and so project beyond the bottom of the disc tooth 30. The distal end 116 of the arm section 102 could also similarly comprises a foot portion which abuts against the bottom 33 of the hub slot 32 to generate a radial biasing force similarly to the embodiment shown in figures 8 to 10.

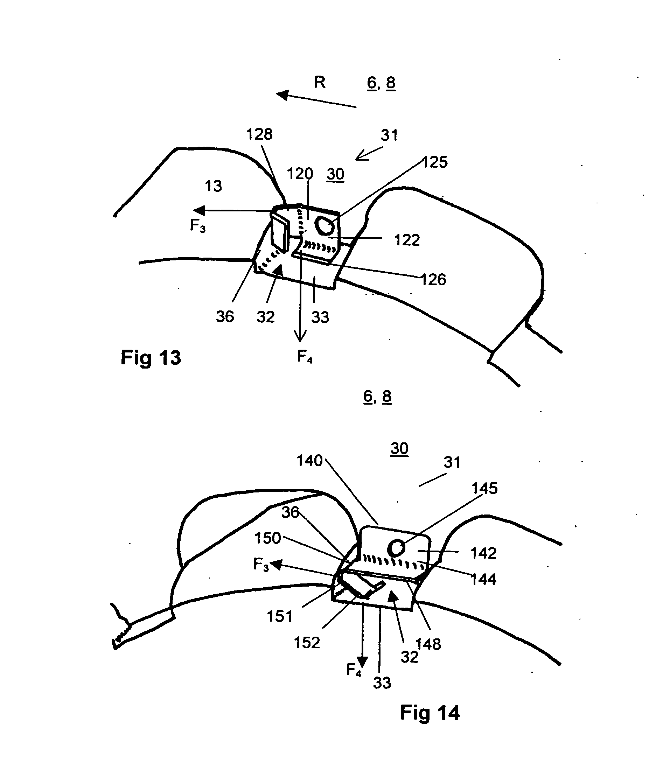

A yet further embodiment is shown in figure 13, in which the force applicators for a disc brake 10, as shown in figures 1 and 2, comprise springs 120 which are mounted and fitted to the front axial face 31 of the disc teeth 30. As shown the spring 120 is fabricated from sheet of spring steel suitable bent to the desired shape. The spring 120 comprises base portion 122 comprising a planar mounting portion 124 including a mounting aperture 125 for a fastener (not shown) to mount the spring 120 and mounting portion 124 to the front axial face 31 of the disc tooth 30. The fastener may comprise for example a rivet or screw. Alternatively the mounting portion 122 may be attached to the axial front face 31 in any other suitable manner, for example by adhesive.

One side and edge portion 128 of the base portion 122 is bent away from the mounting portion 124 and axial end face 31 of the disc tooth 30 and into a C shape to provide an outward facing abutment surface 130 axially forward of the mounting portion 124 and axial face 31 of the disc tooth 30. The abutment surface 130 is arranged and disposed from the mounting portion 124 of the spring 120 to abut against the abutment wall 36 of the hub slot 32. The C shape edge portion 128 and abutment surface 130 are biased against the drive wall 36 of the hub slot 32 to generate a single circumferentially-directed biasing force F3 between the disc tooth 30 and hub slot 32, and between the disc 6,8 and hub 4. As in the previous embodiments this single circumferentially-directed biasing force F3 urges the opposite side and opposite abutment surface 34 of the disc tooth 30 against the opposite drive wall 36 of the hub slot 32 thereby locating the disc tooth 30 in the slot 32, pre-loading the disc tooth30 against the drive wall 36, and locating, centering and stabilizing the disc 6,8 on the hub 4.

The mounting portion 124 extends and projects radially bellow the bottom of the tooth 30, in use towards the base of 33 of the hub slot 32, and has a foot portion 126 projecting axially forward from the end of the base potion 122. The foot portion is arranged to in use abut against the bottom33 of the hub slot 32. The foot portion 126 is biased by the spring 120 configuration and resilience of the spring 120 material against the bottom 33 of the hub slot 32 and generates a radially directed biasing force between the disc tooth 30 and hub slot 32 which further assists in centering and locating the disc 6,8 on the hub 4 as described above in the some of the other embodiments.

As with the previous embodiments the circumferentially directed biasing force F3 and the radially directed biasing force F4 and abutment of the spring 120 with the hub 4 are spaced from the contact between the disc teeth 30 and slot 32, and the resultant circumferentially directed biasing force F2 is spaced from the line of action of the circumferentially directed reaction force F0, centered on the centre of contact between the drive face 34 of the tooth 30 with the drive wall 36 of the slot 32. In this case the circumferentially directed biasing force F3 and contact and action of the spring 120 with the disc tooth 30, whilst generally in the same radial location, and against the same drive wall 36 of the hub slot 32 is located axially away from of the circumferentially directed reaction force F0 and abutment between the disc tooth 30 and hub slot 32.

Another embodiment is shown in figure 14, in which the force applicators for a disc brake 10, as shown in figures 1 and 2, comprise springs 140 which are mounted and fitted to the front axial face 31 of the disc teeth 30. Again as shown the spring 140 is fabricated from sheet of spring steel suitable bent to the desired shape. The spring 140 comprises base portion 142 comprising a planar mounting portion 144 including a mounting aperture 145 for a fastener (not shown) to mount the spring 140 and mounting portion 144 to the front axial face 31 of the disc tooth 30. The fastener may comprise for example a rivet or screw. Alternatively the mounting portion 122 may be attached to the axial front face 31 in any other suitable manner, for example by adhesive.

A bottom lower edge portion 148 of the base portion 142 is bent away axially forward from the mounting portion 144 and axial end face 31 of the disc tooth 30. One side of this lower edge portion extends and projects laterally/circumferentially and is bent into a C shaped portion 151 below and underneath the lower edge portion 148 to define an lateral/circumferentially outward facing abutment surface 150, and at a distal end, a foot portion 152 parallel and below the lower edge portion 148. The abutment surface 150 is arranged and disposed from the mounting portion 144 of the spring 120 to abut against the abutment wall 36 of the hub slot 32. The C shape edge portion 151 and abutment surface 150 are biased against the drive wall 36 of the hub slot 32 to generate a single circumferentially-directed biasing force F3 between the disc tooth 30 and hub slot 32, and between the disc 6,8 and hub 4. As in the previous embodiments this single circumferentially-directed biasing force F3 urges the opposite side and opposite drive face 34 of the disc tooth 30 against the opposite drive wall 36 of the hub slot 32 thereby locating the disc tooth 30 in the slot 32, pre-loading the disc tooth30 against the drive wall 36, and locating, centering and stabilizing the disc 6,8 on the hub 4. The foot portion 152 is arranged to in use abut against the bottom 33 of the hub slot 32. The foot portion 152 is biased by the spring 140 configuration and resilience of the spring 140 material against the bottom 33 of the hub slot 32 and generates a radially directed biasing force between the disc tooth 30 and hub slot 32 which further assists in centering and locating the disc 6,8 on the hub 4 as described above in the some of the other embodiments.

As with the previous embodiments the circumferentially directed biasing force F3 and the radially directed biasing force F4 and abutment of the spring 140 with the hub 4 are spaced from the contact between the disc teeth 30 and slot 32, and the resultant circumferentially directed biasing force F2 is spaced from the line of action of the circumferentially directed reaction force F0, centered on the centre of contact between the drive face 34 of the tooth 30 with the drive wall 36 of the slot 32. In this case the circumferentially directed biasing force F3 and contact and action of the spring 140 with the disc tooth 30, whilst generally in the same radial location, and against the same drive wall 36 of the hub slot 32 is located axially away from of the circumferentially directed reaction force F0 and contact between the disc tooth 30 and hub slot 32.

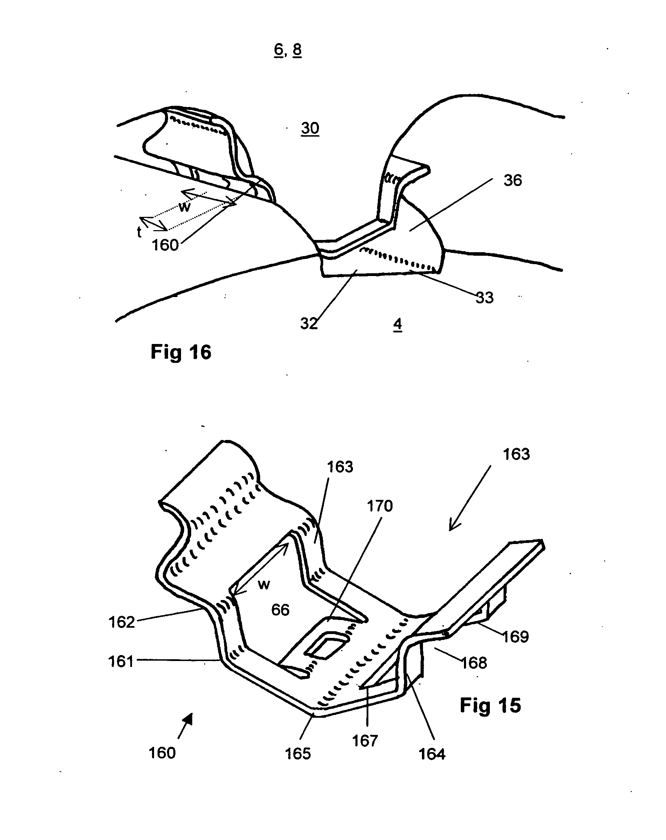

Figures 15 to 17 illustrate yet another embodiment and spring 160 which is fitted to the disc teeth 30, for example of a disc brake 10, as shown in figures 1 and 2, to act a force applicators between the disc 6,8 and hub 4. The springs 160 are fabricated from sheet of spring steel suitably stamped and bent to the desired shape. The spring 160 as shown is generally V shaped having diverging side section 162,164 which are joined together at a bottom apex/ridge 165. The side sections 162,164 each include a generally rectangular cut out 166,168 defined and framed by side strip sections 161,163, 167,169 of the side sections 162,164 and the apex ridge section 165 of the spring 160.

The cutouts 166,168 define an aperture 163 within the spring 160 to receive and enable the spring 160 to be fitted over and onto the disc teeth 30 with the disc teeth 30 located within the cutouts 166,168, and the side strip sections 161 and 167 located axially in front of the front surface 31 of the disc tooth 30, and the side strip sections 163 and 169 located axially behind the rear 29 surface 31 of the disc tooth 30. As a result the spring 160 straddles and cradles the disc tooth 30 leaving the drive faces 34 of the disc tooth 30 clear and free to directly abut the drive walls 36 of the hub slot 32 .In a preferred arrangement the axial width w of the cut outs 166,168 and axial space between the side strip sections 161,163, 167,169 is greater than that of the thickness t of the disc tooth 30 such that the spring 160 can move axially with respect to the disc tooth 30 within the cut outs 166,168. In particular the width w is sized to accommodate the usual in use cyclic axial movements of the disc during braking so disc tooth 30 can move axially within the cutouts 166,168 during normal braking operation without the disc tooth faces 29,31 contacting the edges of the side strip sections 161,163, 167,169 and with the spring 160 remaining axially fixed within the slot 32. The exact sizing of the aperture relative to the disc thickness will depend upon the particular application and brake characteristics. Only then as the pads 12,14,16 and discs 6,8 wear and the discs 6,8 nominal axial position moves further along the hub 4 will the springs 160 and specifically side strip sections 161,163, 167,169 contact the faces 31,29 of the disc tooth 30 to cause the spring 160 to move axial and slowly migrate axially along the hub slot with the disc. 6,8. The spring 160 therefore does not substantially affect or restrict the normal axial movement of the disc 6,8 within the slot 32, and additional frictional loads restricting axial sliding of the disc6,8 are minimized, whilst the spring will move axially in use to accommodate brake wear. This is a further significant, and to some extent separate aspect of this embodiment and invention.

When the disc brake 10 is assembled the spring 160 is fitted over the disc teeth 30 and into the hub slot 32. Hub slot abutting portions 172,174 of, and part way along the side strip sections 161,163, 167,169 of the spring 160 are shaped to abut the drive walls 36 of the hub slot 32. The side portions 162,164 are biased to diverge outwards and apart such that the hub slot abutting portions 172,174 are biased against the hub slot drive walls 36. The apex portion 15 of the spring 160 abuts against the bottom 33 of the hub slot 32. A distal end portion 176 of the leading side arm 162 extends and projects radially out of the hub slot and beyond the outer cylindrical surface 35 of the hub 4. The distal end portion 176 has a serpentine shape such that a distal end 178 abuts and is biased against an edge 27 of the disc tooth 30. As a result the spring 160 generates a resilient biasing force F6 between the abutment of the distal end 178 of the spring 160 with the disc tooth 30 and the abutment of the hub slot abutment portions 172,174 with the hub slot wall 36. This resilient biasing force F6 as applied to the disc tooth 30 by the distal end 178 of the spring 160 has both a circumferentially directed component F7 and radially outwardly directed component F8. This is due to the angled profile of the disc edge 29 which is at an angle to the true radial direction, as well as due to the overall divergent V shape of the spring 160 with the radially inner hub slot abutting portion 172 abutting against the hub slot drive wall 36 being spaced circumferentially from the distal end 178. The circumferentially directed component F7 is directed circumferentially against the normal direction of rotation R and biases and presses the disc tooth 30 and specifically the opposite, trailing edge of the disc tooth 30 against the trailing drive wall 36 of the hub slot 32. As a result the circumferentially directed biasing force F7 centers and locates the disc tooth 30 within the slot 32 and against the trailing drive wall 36 to both centre and locate the disc 6,8, and pre-load the disc 6,8 and disc tooth 30 in the braking direction (i.e. opposite direction to the normal rotation of the disc R). The radially directed component F8, and corresponding components from on the other disc teeth 30 disposed circumferentially around the disc 6,8 further assist in centering and locating the disc coaxially on the hub 4.

As with the previous embodiments the biasing force F6 and action of the spring 160 on the disc 6,8 where they contact, as well as abutment of the spring 160 with the hub 4 are spaced from the contact between the disc teeth 30 and slot 32, and the resultant circumferentially directed biasing force F2 is spaced from the contact between the drive face 34 of the tooth 30 with the drive wall 36 of the slot 32. In this case the biasing force F6 and contact and action of the spring 160 with the disc tooth 30, is located radially outward and away from of the circumferentially directed reaction force F0. The contact between the hub slot abutting portions 172,174 of the spring 160 and the drive wall 36 of the hub slot 32, to react the spring biasing force F6, is axially spaced from the abutment between the drive face 34 of the tooth 30 with the drive wall 36 of the slot 32. Specifically hub slot abutting portion 172 abuts the abutment wall 36 of the slot axially in front of the disc tooth 30 and hub slot abutting portion 174 abuts the abutment wall 36 axially behind the disc tooth 30. The apex portion 165 which radially reacts any radial components between the disc and hub acts on the bottom 33 of the hub slot away from contact between the drive face 34 of the disc teeth 30 and drive walls 36 of the hub slots 32. The spring 160 therefore does not impede the abutment and contact surfaces of the teeth 30 and hub 4, and the spring 160 is less affected (for example deforming, over stressing, or wearing) by the high circumferential loads generated, in use between the hub slot 32 and teeth 30. In particular the disc teeth 30 and drive faces 34 of the disc teeth 30 are able to directly abut against the drive walls 36 of the hub slot and in the hub slot 32 to transmit the in use loads between the disc 6,8 and hub 4.

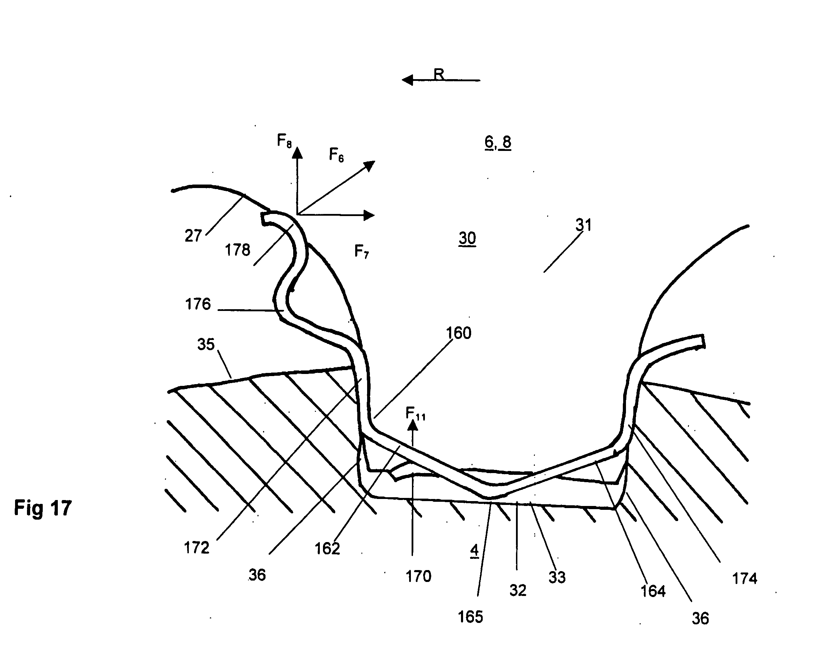

A disc support tang 170 extends from the apex ridge portion 165 and as shown in figure 17 abuts against the bottom surface 37 of the disc tooth 30. The apex portion 165 of the hub spring 160 abuts against the bottom 33 of the hub slot 32. A further resilient biasing force F11 is therefore generated between the apex portion 165 abutting the bottom 33 of the hub slot 32 and the disc support tang 170 abutting and pressing against the bottom of the disc tooth. This, as with the radial component F8 if the resilient basing force F6, further assists in centering the disc 6,8.

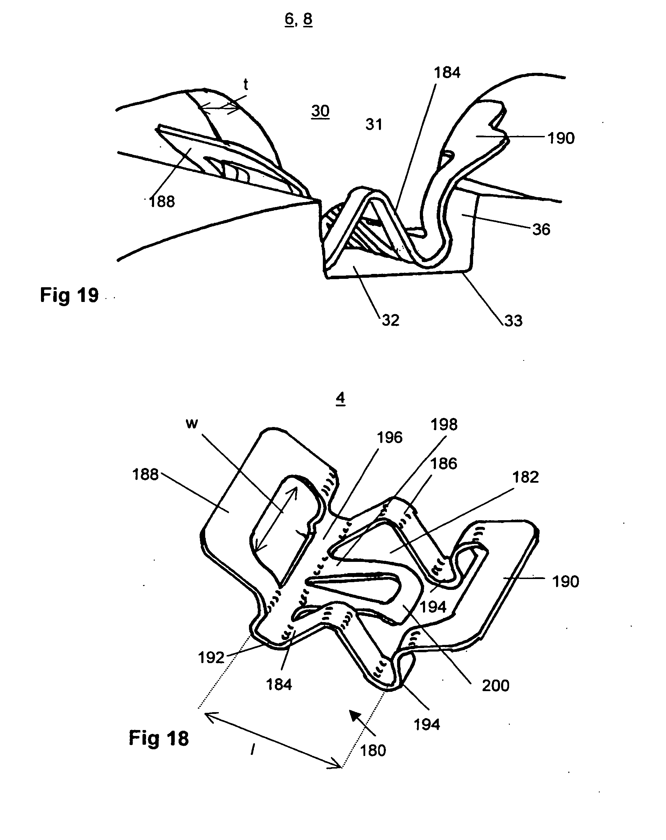

Another embodiment and spring 180 is shown in figures 18 to 20. A plurality of such springs 180 are arranged to be fitted to the disc teeth 30, of a disc brake 10 of figures 1 and 2, to act a force applicators between the disc 6,8 and hub 4. The springs 180 are fabricated from sheet of spring steel suitably stamped and bent to the desired shape. The spring 180 as shown is bent into a generally W shape. A generally rectangular central cut out and opening 182 is defined within the centre of the spring 180 framed and defined by side strip sections 184,186 and cross members 188,190 connecting each respective end of the side strip sections 182,184. The cutout 182 enables the spring 180 to be fitted over and onto the disc teeth 30 with the disc teeth 30 located within the cutout 182, and the side strip 184 located axially in front of the front surface 31 of the disc tooth 30, and the side strip sections 186 located axially behind the rear 29 surface 31 of the disc tooth 30. As a result the spring 180 straddles and cradles the disc tooth 30 leaving the drive faces 34 of the disc tooth 30 clear and free to directly abut the drive walls 36 of the hub slot 32. In a preferred arrangement the axial width w of the cut out 182 and axial space between the side strip sections 184,186 is greater than that of the thickness t of the disc tooth 30 such that the spring 180 can move axially with respect to the disc tooth 30 within the cut outs 182. In particular the width w is sized to accommodate the usual in use cyclic axial movements of the disc 6,8 during braking so that the disc tooth 30 can move axially within the cutout 182 during normal braking operation without the disc tooth faces 29,31 contacting the edges of the side strip sections 184,186 and with the spring 180 remaining axially fixed within the slot 32. Only then as the pads 12,14,16 and discs 6,8 wear and the discs 6,8 nominal axial position moves further along the hub 4 will the spring 180 and specifically side strip sections 184,186 contact the faces 31,29 of the disc tooth 30 to cause the spring 180 to move axial and slowly migrate axially along the hub slot 32 with the disc. 6,8. The spring 180 therefore does not substantially affect or restrict the normal axial movement of the disc 6,8 within the slot 32, and additional frictional loads restricting axial sliding of the disc 6,8 are minimized, whilst the spring 180 will move axially in use to accommodate brake wear. This is similar to the embodiment shown in figures 15 to 17, and is a further significant, and to some extent separate aspect of this embodiment and invention.

When the disc brake 10 is assembled the spring 160 is fitted into the hub slot 32 around the disc tooth 30. Lower bottom apex portions 192,194 of the spring 160 have a curved profile and are located in the respective bottom corners of the hub slot 32 abutting against both the bottom of the hub slot 33 and the respective drive walls 36 of the hub slot 32. The lateral spacing 1 between the lower bottom apex sections 192,194 in the natural undeflected state is greater than the width of the hub slot Wh. Accordingly when the springs 180 are fitted into the hub slot 32 the lower bottom apex portions 192,194 are deflected laterally inwardly and lower bottom apex section 192,194 are resiliently biased laterally and circumferentially against the drive walls 36 of the slot 32.

A further cross member 196 connects the side strip sections 182,184 along one of the lower bottom apex portions 192 of the spring 180. A disc support tang 198 extends from the cross member 196 upwardly at an angle and into the cut out portion 182 of the spring 180 such that a distal end 200 of the disc support tang 198 is biased, and abuts, against an inclined bottom surface 202 of the disc tooth 30 with the disc support tang pivoting axially about the cross member 196. As shown thin this embodiment the bottom of the disc tooth is curved in a circumferential direction, in contrast to the flat bottom 33 of the other embodiments, to provide the inclines bottom surface 202. The abutment of the distal end 200 of the disc support tang 198 with the inclined bottom surface 202 of the disc tooth 30 generates and applies a biasing force F9 to the bottom surface 202 of the disc tooth 30 acting between the inclined bottom surface 202 and the abutment of the lower apex sections 192, 194 with the drive walls 36 and bottom 33 of the hub slot 32. This force F9 is angled, by virtue of the abutment of the distal end 200 of the disc support tang 198 with the inclined bottom surface 202, and has both a circumferentially and radially directed components. The circumferentially directed component is directed circumferentially against the normal direction of rotation R and biases and presses the disc tooth 30 and specifically the opposite, trailing edge of the disc tooth 30 against the trailing drive wall 36 of the hub slot 32. As a result the circumferentially directed biasing force centers and locates the disc tooth 30 within the slot 32 and against the trailing drive wall 36 to both centre and locate the disc 6,8, and pre-load the disc 6,8 and disc tooth 30 in the braking direction (i.e. opposite direction to the normal rotation of the disc R) thereby pre-loading the disc tooth against the hub slot 32. The radially directed component, and corresponding components from on the other disc teeth 30 disposed circumferentially around the disc 6,8 further assist in centering and locating the disc coaxially on the hub 4.

As with the previous embodiments the abutment between the spring 180 and disc 6,8 and hub 4 to generate the biasing force F9, is spaced from the contact and abutment between the drive face 34 of the tooth 30 with the drive wall 36 of the slot 32. In this case the contact and action of the spring 180 with the disc tooth 30 is on the inclined bottom surface 202 of the disc tooth 30 away from the drive surface of the disc tooth 30, and the contact between the spring 180 and the hub slot 32 at the lower bottom apex sections is radially inwardly and below the disc tooth 30, as well as being similarly spaced axially in front of and behind the axial plane of the disc 6,8 along the hub slot. The spring 180 therefore does not impede abutment of the drive faces 34 of the teeth 30 with the drive walls of the hub slot 32, and so the spring 180 is less affected (for example deforming, over stressing, or wearing) by the high circumferential loads generated, in use between the hub slots 32 and teeth 30. In particular the disc teeth 30 and drive faces 34 of the disc teeth 30are able to directly abut against the drive walls 36 of the hub slot and in the hub slot 32 to transmit the in use loads between the disc 6,8 and hub 4.

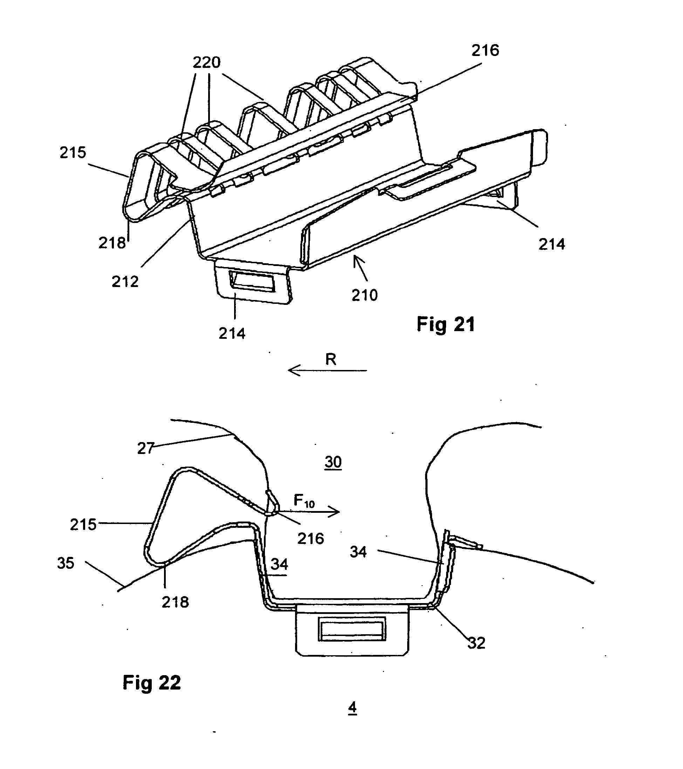

Yet another embodiment in figures 21 and 22. In this embodiment the force applicators for use in the disc brake shown in figures 1 and 2 comprise a plurality of spring 210 which are fitted into the hub slots 32. Each of the springs 210 are fabricated from sheet of spring steel suitably stamped and bent to the desired shape.

The spring comprises a liner portion 212 in the form of a U shaped trough shaped to fit into the hub slot 32 against the side drive walls 36 and bottom 33 of the slot 32. The liner portion 212 locates and mounts the spring 210 to the hub 4 with locating tabs 214 extending from the bottom and one side of the liner 212 at either axial end and biased axially against end faces of the hub 4 to locate the spring 210 axially within the slot 32.

An upper portion of one side of the liner portion 212extends into a C section shaped portion 215 of the spring 210, which when the spring 210 is installed on the hub 4 is located radially outside of the hub 4 on a leading side of the disc tooth 30 with a bottom portion of the C section shaped portion of the spring abuts against the outer cylindrical surface 35 of the hub 4. Figure 22 shows the spring 210 in its natural undeflected state superimposed in its mounting location on the hub 4. When the spring 210 is actually installed on the hub 4, the C section shaped portion 215 is pivoted about the abutment of the bottom portion 218 of the C section shaped portion 215 with the outer cylindrical surface 35 of the hub 4 such that a distal edge 216 abuts against an upper edge 27 of the disc tooth 30. The distal edge 216 and spring 210 thereby applies a generally circumferentially directed biasing force F10 on the disc tooth 30 between the disc 6,8 and hub 4. This circumferentially directed biasing force F10 on the disc tooth 30, presses the drive face 34 of the disc tooth 30 on the opposite (trailing) side of the tooth 30 towards and against other side of the liner 212 and against the drive wall 36 of the slot 32, taking up any clearance between the drive face 34, liner 212, and drive wall 36, thereby locating and positioning the tooth 32 within the slot 32 as well as centering the disc 6,8 on the hub 4. Advantageously in this arrangement the circumferentially directed biasing force F10 and the spring 40, are located away from the drive abutment between the drive face 34 of the disc tooth 30 and slot 32. In this case the circumferentially directed biasing force F10 of the upper distal edge 216 of the spring 210 with the disc tooth 30, whilst in the same axial plane is located radially outwardly of the contact and abutment of the drive face 34 of the disc tooth 30 in the slot 32. As a result, and since the liner portion 212 is flush against the drive walls 36 of the hub slot 32 the spring 210 does not overly interfere with the abutment and contact surfaces of the teeth 30 and hub 4, and is not affected by the high circumferential loads generated, in use between the hub slots 32 and teeth 30.

To vary the circumferentially directed biasing force F10 portion of the C section shaped portion 215 may be removed, such that the C section shaped portion 215 comprises a series of axially spaced finger elements 220 or strips between the liner portion 212 and a distal edge portion 216 of the spring 210, with the more material removed reducing the force generated by the spring 210.

The liner 212 in this embodiment protects the hub slot 32 from wear. However it has been found that as the liner portion 21 wears it can impede the sliding of the disc tooth 30 within the hub slot 32, and fretting can occur between the hub slot 32, liner 212 and disc tooth 30. Accordingly the other embodiments in which the disc teeth 30 and drive faces 34 of the disc teeth 30 are able to directly abut against the drive walls 36 of the hub slot and in the hub slot 32 to transmit the in use loads between the disc 6,8 and hub 4 are preferred.

It will be appreciated that there are many modifications to the above described embodiments. For example while the springs have been described as being formed from sheet spring steel, they may be formed from other materials.

The detail configuration of the springs and shapes may also be varied without departing from the functional principles of the invention. As shown the springs may be attached to the disc 6,8 or hub 4, and may be attached and mounted in any manner of ways. In addition while the invention has been described with reference to twin axial sliding discs the invention can be applied to brakes with any number of axial sliding discs, including disc brakes having only one axial sling disc.

It will also be appreciated that various elements and aspects of the various embodiments may be variously combined in alternative embodiments and aspects of the invention, and such individual features of the embodiments may be generalized in yet further aspects of the invention.

## Claims

1. A disc brake (10) comprising:
a hub (4) mounted to rotate about a central axis (1);
a disc (6,8) axially slidably mounted on the hub (4) to rotate in use with the hub (4) and axially slide along the hub(4) parallel to the axis (1), the disc (6,8) being axially slidably mounted on the hub (4) by a plurality of radially projecting teeth (30) which are slidingly engaged in a corresponding plurality of axially extending slots (32), the teeth (30) and slots (32) having respective circumferentially facing drive faces (34,36) which abut in use against each other; and
a plurality of force applicators (40,100,120,140,160,180,210), each comprising a leaf type spring and mounted between the hub (4) and disc (6,8) to apply, in use, a circumferentially-directed biasing force (F1,F3,F6,F7,F9,F10) between the disc (6,8) and hub (4), to bias the drive faces (34) of the teeth (30) into engagement with the drive faces (36) of the slots (32);
**characterized in that** the force applicators (40,100,120,140,160,180,210) act circumferentially between the disc (6,8) and hub (4) to apply, in use, the circumferentially-directed biasing force (F1,F3,F6,F7,F9,F10) between the disc (6,8) and hub (4) at a location spaced from the line of action of the circumferential contact force between the drive faces (34,36) of the teeth (30) and slots (32).

2. A disc brake as claimed in claim 1 in which the force applicators (40,100,120,140,160,180,210) act between the disc (6,8) and hub (4) at a location which is axially spaced from the line of action of the circumferential contact force between the drive faces (34,36) of the teeth (30) and slots (32)

3. A disc brake as claimed in claim 1 or 2 in which the force applicators (40,100,120,140,160,180,210) act between the disc (6,8) and hub (4) at a location which is radially spaced from the line of action of the circumferential contact force between the drive faces (34,36) of the teeth (30) and slots (32).

4. A disc brake as claimed in claim 3 in which the force applicators (40,100,120,140,160,180,210) act between the disc (6,8) and hub (4) at a location which is radially outward of the line of action of the circumferential contact force between the drive faces (34,36) of the teeth (30) and slots (32).

5. A disc brake as claimed in any preceding claim in which the circumferentially-directed biasing force (F1,F3,F6,F7,F9,F10) applied by the plurality of resilient force applicators (40,100,120,140,160,180,210) biases the disc (6,8) relative to the hub (4) in direction opposite to the predominant direction of rotation (R) of the disc (6,8) and hub (4).

6. A disc brake as claimed in any preceding claim in which the circumferentially-directed biasing force (F1,F3,F6,F7,F9,F10) applied by the plurality of resilient force applicators (40,100,120,140,160,180,210) biases the drive faces (34) on one side of the teeth (30) against the corresponding drive faces (36) of the slots (32).

7. A disc brake as claimed in any preceding claim in which the teeth (30) project radially inwardly from the disc (6,8), and the slots (32) are formed in an outer circumference (35) of the hub (4).

8. A disc brake as claimed in claim 7 in which the force applicators (40,160,180,210) are located on the hub (4) and act on the teeth (30).

9. A disc brake as claimed in any preceding claim in which the force applicators (100,120,140,160,180,210) are located in the slots (32).

10. A disc brake as claimed in claim 9 in which the force applicators (160,180) act on a bottom surface (37,202) of the disc teeth (30).

11. A disc brake as claimed in claim 8 in which a portion (50) of the force applicators (40) slidingly abuts against the hub (4) and is arranged in use to circumferentially slide relative to hub (4) and frictionally damp circumferential movement of a portion (48) of the force applicator (40) which acts on the disc tooth (30).

12. A disc brake as claimed in any preceding claim in which the force applicators (120,140,160,180) also act between the disc (6,8) and hub (4), at a location spaced from the in use abutment of the drive faces (34,36) of the teeth (30) and slots (32), to also apply in use a radially-directed biasing force (F4,F5,F6,F8,F9,F11) between the disc (6,8) and hub (4).

13. A disc brake as claimed in claim 12 in which the force applicators (160,180) act between the disc (6,8) and hub (4), at a location spaced from the in use abutment of the drive faces (34,36) of the teeth (30) and slots (32), to apply in use an angled biasing force (F6,F9) between the disc (6,8) and hub (4) having both a circumferentially-directed component (F7) and a radially directed component (F8).

14. A disc brake as claimed in claim 13 in which the force applicators (40,100,120,140,160,180,210) act between the disc (6,8) and hub (4) on an angled surface (27,202) which is at an angle to both the circumferential and radial directions.

15. A disc brake as claimed in any preceding claim in which the force applicators (160,180) have an aperture (163,182) defined therein and the force applicators (160,180) are fitted over the teeth (30) with the teeth (30) located within the aperture (163,182) which has an axial width (w) greater than an axial thickness (t) of the disc (6,8) so as to accommodate cyclical axial movement of the disc (6,8) within the aperture (163,182) during normal braking operation.

## Patentansprüche

1. Eine Scheibenbremse (10), welche aufweist:
eine Nabe (4), die befestigt ist, um um eine zentrale Achse (1) herum zu rotieren;
eine Scheibe (6, 8), die axial verschiebbar auf der Nabe (4) befestigt ist, um im Einsatz mit der Nabe (4) zu rotieren und axial entlang der Nabe (4) parallel zu der Achse (1) zu verschieben, wobei die Scheibe (6, 8) axial verschiebbar auf der Nabe (4) mittels einer Mehrzahl von radial hervorspringenden Zähnen (30) befestigt ist, welche verschiebend in einer korrespondieren Mehrzahl von sich axial erstreckenden Schlitzen (32) im Eingriff sind, wobei die Zähne (30) und Schlitze (32) jeweilige umlaufend gegenüberliegende Antriebsflächen (34, 36) aufweisen, die im Einsatz aneinander angrenzen; und
eine Mehrzahl von Kraftapplikatoren (40, 100, 120, 140, 160, 180, 210), wobei jeder eine blattartige Feder aufweist und zwischen der Nabe (4) und der Scheibe (6, 8) befestigt ist, um, im Einsatz, eine umlaufend-gerichtete Vorspannkraft (F1, F3, F6, F7, F9, F10) zwischen der Scheibe (6, 8) und der Nabe (4) anzuwenden, um die Antriebsflächen (34) der Zähne (30) in Eingriff mit den Antriebsflächen (36) der Schlitze (32) vorzuspannen;
**dadurch gekennzeichnet, dass** die Kraftapplikatoren (40, 100, 120, 140, 160, 180, 210) umlaufend zwischen der Scheibe (6, 8) und der Nabe (4) agieren, um, im Einsatz, die umlaufend-gerichtete Vorspannkraft (F1, F3, F6, F7, F9, F10) zwischen der Scheibe (6, 8) und der Nabe (6, 8) an einer Position anzuwenden, die von der Wirkungslinie der umlaufenden Kontaktkraft zwischen den Antriebsflächen (34, 36) der Zähne (30) und der Schlitze (32) beabstandet ist.

2. Eine Scheibenbremse gemäß Anspruch 1, wobei die Kraftapplikatoren (40, 100, 120, 140, 160, 180, 210) zwischen der Scheibe (6, 8) und der Nabe (4) an einer Position agieren, die axial von der Wirkungslinie der umlaufenden Kontaktkraft zwischen den Antriebsflächen (34, 36) der Zähne (30) und der Schlitze (32) beabstandet ist.

3. Eine Scheibenbremse gemäß Anspruch 1 oder 2, wobei die Kraftapplikatoren (40, 100, 120, 140, 160, 180, 210) zwischen der Scheibe (6, 8) und der Nabe (4) an einer Position agieren, die radial von der Wirkungslinie der umlaufenden Kontaktkraft zwischen den Antriebsflächen (34, 36) der Zähne (30) und der Schlitze (32) beabstandet ist.

4. Eine Scheibenbremse gemäß Anspruch 3, wobei die Kraftapplikatoren (40, 100, 120, 140, 160, 180, 210) zwischen der Scheibe (6, 8) und der Nabe (4) an einer Position agieren, die radial auswärts von der Wirkungslinie der umlaufenden Kontaktkraft zwischen den Antriebsflächen (34, 36) der Zähne (30) und der Schlitze (32) ist.

5. Eine Scheibenbremse gemäß einem der vorhergehenden Ansprüche, wobei die umlaufend-gerichtete Vorspannkraft (F1, F3, F6, F7, F9, F10), die durch die Mehrzahl von federnden Kraftapplikatoren (40, 100, 120, 140, 160, 180, 210) angewendet wird, die Scheibe (6, 8) relativ zu der Nabe (4) in einer Richtung entgegengesetzt zu der vorherrschenden Richtung der Rotation (R) der Scheibe (6, 8) und der Nabe (4) vorspannt.

6. Eine Scheibenbremse gemäß einem der vorhergehenden Ansprüche, wobei die umlaufend-gerichtete Vorspannkraft (F1, F3, F6, F7, F9, F10), die durch die Mehrzahl von federnden Kraftapplikatoren (40, 100, 120, 140, 160, 180, 210) angewendet wird, die Antriebsflächen (34) auf einer Seite der Zähne (30) gegen die korrespondieren Antriebsflächen (36) der Schlitze vorspannt.

7. Eine Scheibenbremse gemäß einem der vorhergehenden Ansprüche, wobei die Zähne (30) radial nach außen von der Scheibe (32) hervorspringen, und die Schlitze (32) in einem äußeren Umfang (35) der Nabe (4) gebildet sind.

8. Eine Scheibenbremse gemäß Anspruch 7, wobei die Kraftapplikatoren (40, 160, 180, 210) auf der Nabe (4) angeordnet sind und auf die Zähne (30) einwirken.

9. Eine Scheibenbremse gemäß einem der vorhergehenden Ansprüche, wobei die Kraftapplikatoren (100, 120, 140, 160, 180, 210) in den Schlitzen (32) angeordnet sind.

10. Eine Scheibenbremse gemäß Anspruch 9, wobei die Kraftapplikatoren (160, 180) auf eine untere Oberfläche (37, 202) der Scheibenzähne (30) einwirken.

11. Eine Scheibenbremse gemäß Anspruch 8, wobei ein Teilbereich (50) der Kraftapplikatoren (40) verschiebend an die Nabe (4) angrenzt und im Einsatz angeordnet ist, um umlaufend relativ zu der Nabe (4) zu verschieben und reibend umlaufende Bewegung eines Teilbereichs (48) des Kraftapplikators (40) zu dämpfen, der auf den Scheibenzahn (30) einwirkt.

12. Eine Scheibenbremse gemäß einem der vorhergehenden Ansprüche, wobei die Kraftapplikatoren (120, 140, 160, 180) auch zwischen der Scheibe (6, 8) und der Nabe (4) agieren, an einer Position beabstandet von der Angrenzung im Einsatz der Antriebsflächen (34, 36) der Zähne (30) und der Schlitze (32), um im Einsatz auch eine radial-gerichtete Vorspannkraft (F4, F5, F6, F9, F9, F11) zwischen der Scheibe (6, 8) und der Nabe (4) anzuwenden.

13. Eine Scheibenbremse gemäß Anspruch 12, wobei die Kraftapplikatoren (160, 180) zwischen der Scheibe (6, 8) und der Nabe (4) agieren, an einer Position beabstandet von der Angrenzung im Einsatz der Antriebsflächen (34, 36) der Zähne (30) und der Schlitze (32), um im Einsatz eine abgewinkelte Vorspannkraft (F6, F9) zwischen der Scheibe (6, 8) und der Nabe (4) anzuwenden, welche sowohl eine umlaufend-gerichtete Komponente (F7) als auch eine radial-gerichtete Komponente (F8) hat.

14. Eine Scheibenbremse gemäß Anspruch 13, wobei die Kraftapplikatoren (40, 100, 120, 140, 160, 180, 210) zwischen der Scheibe (6, 8) und der Nabe (4) auf einer abgewinkelten Oberfläche (27, 202) agieren, die bei einem Winkel sowohl zu der umlaufenden als auch zu der radialen Richtung ist.

15. Eine Scheibenbremse gemäß einem der vorhergehenden Ansprüche, wobei die Kraftapplikatoren (160, 180) eine Öffnung (163, 182) haben, die darin definiert ist, und die Kraftapplikatoren (160, 180) über die Zähne (30) mit den Zähnen (30) eingepasst sind, die innerhalb der Öffnung (163, 182) angeordnet sind, die eine axiale Breite (w) hat, die größer als eine axiale Dicke (t) der Scheibe (6, 8) ist, so dass zyklische axiale Bewegung der Scheibe (6, 8) innerhalb der Öffnung (163, 182) während normalem Bremsbetrieb aufgenommen werden.

## Revendications

1. Frein à disque (10) comprenant :
un moyeu (4) monté de façon à tourner autour d'un axe central (1) ;
un disque (6, 8) monté sur le moyeu (4) de façon à coulisser axialement pour tourner avec le moyeu (4), en utilisation, et coulisser axialement le long du moyeu (4), parallèlement à l'axe (1), le disque (6, 8) étant monté de façon à coulisser axialement sur le moyeu (4) par l'intermédiaire d'une pluralité de dents (30) saillantes radialement, qui sont en prise, de façon coulissante, avec une pluralité correspondante de fentes (32) s'étendant axialement, les dents (30) et des fentes (32) présentant des faces d'entraînement (34, 36) respectives qui se font face les unes aux autres, dans le sens périphérique, et qui, en utilisation, butent les unes contre les autres,
une pluralité d'applicateurs de force (40, 100, 120, 140, 160, 180, 210) comprenant chacun un ressort à lame et étant montés entre le moyeu (4) et le disque (6, 8) pour appliquer, en utilisation, une force de contrainte dirigée dans le sens périphérique (F1, F3, F6, F7, F9, F10) entre le disque (6, 8) et le moyeu (4), pour contraindre les faces d'entraînement (34) des dents (30) à entrer en prise avec les faces d'entraînement (36) des fentes (32),
**caractérisé en ce que** les applicateurs de force (40, 100, 120, 140, 160, 180, 210) agissent dans le sens périphérique, entre le disque (6, 8) et le moyeu (4), pour appliquer, en utilisation, la force de contrainte dirigée dans le sens périphérique (F1, F3, F6, F7, F9, F10) entre le disque (6, 8) et le moyeu (4), à un endroit espacé de la ligne d'action de la force de contact périphérique entre les faces d'entraînement (34, 36) des dents (30) et des fentes (32).

2. Frein à disque suivant la revendication 1, dans lequel les applicateurs de force (40, 100, 120, 140, 160, 180, 210) agissent entre le disque (6, 8) et le moyeu (4), à un endroit qui est espacé axialement de la ligne d'action de la force de contact périphérique entre les faces d'entraînement (34, 36) des dents (30) et des fentes (32).

3. Frein à disque suivant la revendication 1 ou 2, dans lequel les applicateurs de force (40, 100, 120, 140, 160, 180, 210) agissent entre le disque (6, 8) et le moyeu (4), à un endroit qui est espacé radialement de la ligne d'action de la force de contact périphérique entre les faces d'entraînement (34, 36) des dents (30) et des fentes (32).

4. Frein à disque suivant la revendication 3, dans lequel les applicateurs de force (40, 100, 120, 140, 160, 180, 210) agissent entre le disque (6, 8) et le moyeu (4), à un endroit qui se situe radialement à l'extérieur de la ligne d'action de la force de contact périphérique entre les faces d'entraînement (34, 36) des dents (30) et des fentes (32).

5. Frein à disque suivant une quelconque des revendications précédentes, dans lequel la force de contrainte dirigée dans le sens périphérique (F1, F3, F6, F7, F9, F10), appliquée par la pluralité d'applicateurs de force souples (40, 100, 120, 140, 160, 180, 210), contraint le disque (6, 8), par rapport au moyeu (4), dans le sens opposé au sens de rotation prédominant (R) du disque (6, 8) et du moyeu (4).

6. Frein à disque suivant une quelconque des revendications précédentes, dans lequel la force de contrainte dirigée dans le sens périphérique (F1, F2, F3, F6, F9, F10), appliquée par la pluralité des applicateurs de force souples (40, 100, 120, 140, 160, 180, 210), contraint les faces d'entraînement (34), sur un côté des dents (30), de manière qu'elles butent contre les faces d'entraînement correspondantes (36) des fentes (32).

7. Frein à disque suivant une quelconque des revendications précédentes, dans lequel les dents (30) font, depuis le disque (6, 8), saillie radialement vers l'intérieur et les fentes (32) sont formées dans une périphérie extérieure (35) du moyeu (4).

8. Frein à disque suivant la revendication 7, dans lequel les applicateurs de force (40, 100, 120, 140, 160, 180, 210) sont situés sur le moyeu (4) et agissent sur les dents (30).

9. Frein à disque suivant une quelconque des revendications précédentes, dans lequel les applicateurs de force (100, 120, 140, 160, 180, 210) sont situés dans les fentes (32).

10. Frein à disque suivant la revendication 9, dans lequel les applicateurs de force (160, 180) agissent sur une surface de fond (37, 202) des dents du disque (30).

11. Frein à disque suivant la revendication 8, dans lequel une portion (50) des applicateurs de force (40) bute, en coulissant, contre le moyeu (4) et est conçue, en utilisation, de manière à coulisser dans le sens périphérique par rapport au moyeu (4) et à amortir par friction le mouvement périphérique d'une portion (48) de l'applicateur de force (40) qui agit sur les dents du disque (30).

12. Frein à disque suivant une quelconque des revendications précédentes, dans lequel les applicateurs de force (120, 140, 160, 180) agissent également entre le disque (6, 8) et le moyeu (4), à un endroit espacé de la position en butée adoptée, en utilisation, par les faces d'entraînement (34, 36) des dents (30) et des fentes (32) pour appliquer, en utilisation, également une force de contrainte dirigée radialement (F4, F5, F6, F8, F9, F11) entre le disque (6, 8) et le moyeu (4).

13. Frein à disque suivant la revendication 12, dans lequel les applicateurs de force (160, 180) agissent entre le disque (6, 8) et le moyeu (4), à un endroit espacé de la position en butée adoptée, en utilisation, par les faces d'entraînement (34, 36) des dents (30) et des fentes (32) pour appliquer, en utilisation, une force de contrainte angulaire (F6, F9) entre le disque (6, 8) et le moyeu (4), formant ensemble une composante dirigée dans le sens périphérique (F7) et une composante dirigée dans le sens radial (F8).

14. Frein à disque suivant la revendication 13, dans lequel les applicateurs de force (40, 100, 120, 140, 160, 180, 210) agissent entre le disque (6, 8) et le moyeu (4) sur une surface angulaire (27, 202) qui forme un angle avec les sens périphérique et radial.

15. Frein à disque suivant une quelconque des revendications précédentes, dans lequel les applicateurs de force (160, 180) présentent une ouverture (163,182) définie dans ceux-ci et sont fixés sur les dents (30) de sorte que celles-ci se situent à l'intérieur de l'ouverture (163, 182), qui présente une largeur axiale (w) supérieure à l'épaisseur axiale (t) du disque (6, 8) de manière à loger un mouvement axial cyclique du disque (6, 8) à l'intérieur de l'ouverture (163, 182) pendant une opération de freinage normale.
